# EUROPÄISCHE PATENTSCHRIFT

(11) **EP 2 948 273 B1**
(45) Veröffentlichungstag und Bekanntmachung des Hinweises auf die Patenterteilung: **11.11.2020**
(21) Anmeldenummer: 14702478.0
(22) Anmeldetag: 22.01.2014
(51) Int. Cl.: B25B 11/00, B65H 29/24, B65H 5/22, B42D 25/00, G03H 1/00, G03H 1/04, G03H 1/02, G03H 1/20, B32B 37/00, B32B 38/18, B32B 37/10, B32B 37/12, B32B 38/00

(54) **VERFAHREN ZUR NACHTRÄGLICHEN HOLOGRAFISCHEN BESCHRIFTUNG UND VORRICHTUNG ZUR NACHTRÄGLICHEN HOLOGRAFISCHEN BESCHRIFTUNG**
METHOD FOR SUBSEQUENT HOLOGRAPHIC WRITING AND DEVICE FOR SUBSEQUENT HOLOGRAPHIC WRITING
PROCÉDÉ D'INSCRIPTION HOLOGRAPHIQUE A POSTERIORI ET DISPOSITIF D'INSCRIPTION HOLOGRAPHIQUE A POSTERIORI

(30) Priorität: 22.01.2013 DE 102013200980
(43) Veröffentlichungstag der Anmeldung: 02.12.2015
(73) Patentinhaber: Bundesdruckerei GmbH, 10969 Berlin (DE)
(72) Erfinder: LEOPOLD, André, 10119 Berlin (DE); GAHLBECK, Jeffry, 15517 Fürstenwalde (DE); MÄRTENS, Detlef, 13599 Berlin (DE); EHREKE, Jens, 12587 Berlin (DE)
(74) Vertreter: Patentanwälte Bressel und Partner mbB
(86) Internationale Anmeldenummer: PCT/EP2014/051182
(87) Internationale Veröffentlichungsnummer: WO 2014/114654

(56) Entgegenhaltungen:
- EP-A2- 0 401 566
- WO-A1-2009/056358
- DE-A1- 19 809 502
- GB-A- 2 457 727
- US-A- 4 416 540
- US-A1- 2007 206 248
- US-A1- 2010 328 741
- US-A1- 2011 214 804
- US-A1- 2012 250 119

## Beschreibung

Die Erfindung betrifft ein Verfahren zur nachträglichen holografischen Kennzeichnung eines Verbundkörpers für ein Sicherheitsdokument sowie eine entsprechende Vorrichtung zum Ausführen der Kennzeichnung, entsprechend den angehängten Ansprüchen.

Aus dem Stand der Technik ist es bekannt, Sicherheitsdokumente herzustellen, die einen als Verbundkörper ausgebildeten Dokumentenkörper aufweisen. Moderne Sicherheitsdokumente werden beispielsweise als Laminationsverbundkörper hergestellt, bei denen mehrere Substratschichten miteinander zu dem Verbundkörper laminiert sind. Die mehreren Substratschichten können beispielsweise Kunststoffschichten, insbesondere PVC, Polycarbonat oder ähnliche thermoplastische Kunststoffschichten sein oder auch Papierschichten oder Ähnliches umfassen. In einen solchen Verbundkörper können eine Vielzahl von Sicherheitselementen und Sicherheitsmerkmalen integriert werden.

Als Sicherheitsmerkmal wird ein Merkmal bezeichnet, welches ein unautorisiertes Nachbilden, ein Duplizieren, Verfälschen oder Nachahmen des Merkmals oder eines Gegenstands, in dem das Sicherheitsmerkmal ausgebildet ist, durch andere verhindert, erschwert oder unmöglich macht. Als Sicherheitselement wird eine gegenständliche Ausbildung eines Sicherheitsmerkmals bezeichnet. Gemäß dieser Definition stellt jedes Sicherheitsdokument auch ein Sicherheitselement dar.

Aus dem Stand der Technik ist eine Vielzahl von Sicherheitsmerkmalen und Sicherheitselementen bekannt, welche beispielsweise Wasserzeichen in Papier, spezielle Druckverfahren, eine Verwendung spezieller Drucktinten, ein Integrieren von elektronischen Schaltungen, Prägungen oder auch ein Einbringen von holografischen und beugenden Strukturen umfasst. Ein Klasse von Sicherheitsmerkmalen betrifft somit Hologramme, welche in den Verbundkörper integriert sind. Eine Gruppe von Hologrammen umfasst solche, welche als sogenannte dünne Hologramme ausgebildet sind und deren Strukturtiefe in dem Sicherheitsdokument in der Größenordnung der Wellenlänge des Lichts liegen, mit dem die holografische Struktur rekonstruierbar ist. Zu solchen Hologrammen gehören in erster Linie sogenannte Präge- und Oberflächenhologramme, bei denen die holografische Struktur in einem Oberflächenrelief des Verbundkörpers gespeichert ist. Solche Strukturen können in ein ansonsten fertiggestellten Verbundkörper oder ein fertiggestelltes Sicherheitsdokument nachträglich integriert werden. Solche Strukturen lassen sich jedoch nur sehr schwer für eine individuelle Kennzeichnung nutzen, da das Einbringen in der Regel über Prägestempel erfolgt. Eine Belichtung und anschließende Entwicklung, bei der die Oberflächenstruktur ausgebildet wird, ist sehr aufwändig und für eine Massenherstellung nicht geeignet. Darüber hinaus sind Oberflächenhologramme hinsichtlich einer Beschädigung schlechter geschützt als im Inneren angeordnete Hologramme. In der Regel ist es darüber hinaus üblich, auch solche Prägehologramme beispielsweise zu verspiegeln oder mit einer Schutzlackschicht zu versehen. Nach dem Einprägen sind somit weitere Bearbeitungsschritte notwendig. Auch ist es möglich Hologramme in Form von Patches in ein Sicherheitsdokument einzubringen, die ein entsprechend hergestelltes Hologramm aufweisen.

Sehr viel besser gegen Manipulationen geschützt und einfacher mit einer individuellen Kennzeichnung zu versehen sind hingegen Hologramme, welche in eine photoempfindliche Schicht belichtet werden. In der Regel werden solche Hologramme als sogenannte Volumenhologramme ausgebildet. Diese weisen eine hohe Winkelselektivität und Wellenlängenselektivität auf, welches beispielsweise eine gute Rekonstruierbarkeit mit Weißlicht ermöglicht. Eine Herstellung eines solchen Volumenhologramms erfolgt in der Regel über die Verwendung eines Aufzeichnungsmaterials, z.B. in Form eines Films, der geeignet ist Interferenzstrukturen zu speichern, deren charakteristische Abmessungen im Bereich der Lichtwellenlänge des Lichts liegen, welches für die Aufzeichnung bzw. Rekonstruktion des Hologramms verwendet wird. Für die Massenherstellung hat sich ein sogenanntes Kontaktkopierverfahren als geeignet erwiesen, bei dem der holografische Film vor einem Master angeordnet wird, in dem beugende und/oder lichtablenkende Strukturen ausgebildet sind, die in den holografischen Film übertragen werden sollen. Die beugenden Strukturen des Masters werden bei diesem Verfahren somit in den holografischen Film kopiert. Da die zu kopierenden bzw. erzeugenden Interferenzstrukturen typische Abmessungen im Bereich der Lichtwellenlänge des zur Herstellung und Rekonstruktion genutzten Lichts aufweisen, also typischerweise Strukturgrößen im Bereich einiger 100 nm aufweisen, ist es notwendig, dass der Film sich während der Belichtung in Ruhe befindet und beispielsweise keine Vibrationen ausführt. Daher hat es als vorteilhaft erwiesen, den Film in Kontakt mit dem Master vor diesem anzuordnen, welcher auf einem starren Träger, beispielsweise einer Glasplatte, einer Metallplatte oder Ähnlichem angeordnet oder ausgebildet ist. Zum Kopieren beispielsweise einer Volumenreflexionshologrammstruktur wird kohärentes Licht durch den in unmittelbarer Nähe vor dem Master und insbesondere, wie beschrieben, in Kontakt mit dem Master angeordneten Film auf den Master gestrahlt. Die beugenden oder reflektierenden Strukturen in dem Master beugen oder reflektieren das Licht so, dass das gebeugte oder reflektierte Licht in den holografischen Film zurückgestrahlt wird. Dort interferiert dieses mit dem kohärenten Licht, welches zur Beleuchtung des Masters genutzt wird. In dem holografischen Film bildet sich somit eine Interferenzstruktur aus, welche durch das an dem Master gebeugte Licht festgelegt ist. Die holografische Rekonstruktion des entwickelten Films gleicht der holografischen Rekonstruktion, die beim Beleuchten des Masters zu beobachten ist. In dem holografischen Film wird somit ein Hologramm gespeichert, welches auch als Denisyuk-Hologramm bezeichnet wird und ein Volumenreflexionshologramm ist. Es versteht sich, dass das eingestrahlte Licht eine geeignete Wellenlänge (oder geeignete Wellenlängen) und eine geeignete Einstrahlrichtung (oder geeignete Einstrahlrichtungen) aufweisen muss, so dass eine Beugung an der Beugungsstruktur des Masters in der gewünschten Weise erfolgt.

Die beispielhafte Herstellung eines Masters wie auch das Kontaktkopierverfahren selbst sind beispielsweise in der EP 0 896 260 A2 beschrieben. Der Master umfasst bei der dort beschriebenen Ausführungsform als Beugungsstruktur ein Volumenreflexionshologramm einer Mattscheibe. Wird während des Kontaktkopierverfahrens das zum Belichten verwendete kohärente Licht räumlich moduliert, so kann hierüber die in der räumlichen Modulation enthaltene Information, beispielsweise ein Gesichtsbild, in das einbelichtete Hologramm eingespeichert werden. Je nach räumlicher Modulation wird ein Bereich der Mattscheibe beim Belichten rekonstruiert und somit in das in dem holografischen Film ausgebildete Hologramm einbelichtet oder nicht. Über die so ausgeführte räumliche Intensitätsmodulation lassen sich die Hologrammstrukturen so einbelichten, dass unterschiedliche Orte eine unterschiedliche Beugungseffizienz aufweisen. Somit kann die Gesichtsbildinformation in unterschiedlichen Helligkeitsstufen (Graustufen), die sich bei der Rekonstruktion ergeben, gespeichert werden.

Aus dem Stand der Technik sind unterschiedliche räumliche Lichtmodulatoren bekannt. Beispielsweise können hierfür sogenannte Digital Micromirror Devices (DMD), welche gesteuerte Mikrospiegel umfassen, verwendet werden. Ebenso ist es möglich, das kohärente Licht zu polarisieren und Flüssigkristallzellen zur gesteuerten Modulation des Lichts zu verwenden. Flüssigkristallzellen haben die Eigenschaft, durchtretendes Licht abhängig von einem Schaltzustand unterschiedlich zu verändern. Über einen nachgeschalteten Polarisationsfilter oder polarisationsabhängigen Spiegel oder Strahlteiler kann somit abhängig von dem Schaltzustand einer Flüssigkristallzelle die Lichtausbreitung beeinflusst werden. Wird eine Vielzahl von Flüssigkristallzellen, wie beispielsweise in einem LCD-Display verwendet, so kann ein aufgeweiteter Lichtstrahl zeitgleich in seiner räumlichen Ausdehnung unterschiedlich räumlich moduliert werden.

Als besonders geeignet neben DMD-Modulatoren haben sich sogenannte Liquid-Crystal-on-Silicon-Modulatoren (LCoS-Modulatoren) erwiesen, bei denen die Flüssigkristallzellen vor einer Siliziumschicht angeordnet sind, welche das durch die Flüssigkristallzellen tretende Licht durch diese zurückreflektiert. Abhängig vom Schaltzustand wird erneut der Polarisationszustand des Lichts in den einzelnen Zellen unterschiedlich beeinflusst. Das zurückgestrahlte Licht ist somit räumlich hinsichtlich der Polarisation moduliert. Wird dieses über einen polarisationsabhängigen Stahlteiler oder einen Polarisationsfilter geführt, so wird der austretende Lichtstrahl auch hinsichtlich seiner Intensität moduliert. Der Lichtanteil, der einen vorgegebenen Polarisationszustand aufweist, kann den Strahlteiler oder den Polarisationsfilter passieren, der Anteil des Lichts, der einen zu dem vorgegebenen Polarisationszustand orthogonalen Polarisationszustand aufweist, wird hingegen absorbiert oder abgelenkt.

Ein so in einen Film belichtetes Hologramm, insbesondere wenn dieses bereits personalisiert ist, wird dann einer Verbundkörperfertigung zugeführt. Werden bei der Verbundkörperfertigung bereist individualisierte Halbzeuge zusätzlich zu dem gegebenenfalls individualisierten Hologrammfilm verwendet, so ist eine genaue Abstimmung und Zuordnung der einzelnen Halbzeuge notwendig. Tritt bei einem der Halbzeuge ein Fertigungsfehler auf, so führt dies in der Regel auch zu einem Ausschuss bei dem zugeordneten Hologramm, da eine einzelne Entfernung eines belichteten Hologramms aus einem Filmstreifen in der Produktion häufig aus technischen Gründen nicht möglich ist. Eine beispielsweise fehlerhaft bedruckte Substratschicht, in der Personalisierungsinformationen einer Person aufgedruckt sind, die zu einem personalisierten Hologramm derselben Person korrespondiert, führt somit häufig dazu, dass die Produktion des gesamten Dokuments wiederholt werden muss, einschließlich einer neuen Anfertigung eines Hologramms. Doch selbst wenn nur das Hologramm individualisiert ist und mit nicht individualisierten anderen Halbzeugen zu einem Verbundkörper zusammengefügt wird und eine Kennzeichnung und Individualisierung des Dokumentenrohling erst nach dem Applizieren des Hologramms auf oder in dem Verbundkörper ausgeführt wird, ergibt sich dasselbe Problem, sofern bei einem dieser nachfolgenden Kennzeichnungs- und/oder Individualisierungsschritte ein Fehler auftritt.

Aus der DE 25 58 056 A1 ist ein Verfahren zur Herstellung eines Identitätsträgers durch Aufzeichnen eines Hologramms eines Informationen tragenden Objekts auf einem lichtempfindlichen Aufzeichnungsmaterial mit Hilfe eines Objekt- und eines Referenzstrahles bekannt, wobei das lichtempfindliche Aufzeichnungsmaterial vor der holografischen Belichtung fest und dauerhaft mit dem die Information tragenden Objekt zu dem Identitätsträger verbunden wird und dass der vom Objekt reflektierte Objektstrahl auf das Aufzeichnungsmaterial geführt und auf diesem mit dem Referenzstrahl zu dem Hologramm der aufzuzeichnenden Informationen interferiert.

Aus der Offenlegungsschrift DE 28 53 893 ist ferner ein Verfahren zur Herstellung von Identifikationskarten bekannt, die aus mehreren Schichten aufgebaut sind, wobei eine mit einem oder mehreren Lichtbildern und mit einem Datenblock versehene Vorlage elektrofotografisch auf einem Aufzeichnungsträger abgebildet, entwickelt und auf ein Schichtmaterial als Kartenkern übertragen wird, dass die reihenweise fertiggestellten Kartenkerne in einem Zwischenspeicher gelagert werden und von dort aus einer Kaschierpresse zugeleitet werden, in der sie mit einer unteren und oberen transparenten Schutzfolie aus Polymerenmaterial zu Identifikationskarten-Rohlingen kaschiert werden.

In der Druckschrift DE 10 2007 052 952 A1 sind ein Verfahren und eine Vorrichtung zum Herstellen eines Hologramms als Sicherheitsmerkmal sowie ein Hologramm und ein Sicherheitsdokument mit einem solchen Hologramm beschrieben. Ferner sind ein Verfahren und eine Vorrichtung zur Verifikation eines Hologramms oder eines Sicherheitsdokuments mit einem solchen Hologramm beschrieben. Es wird ein Hologramm mit wasserzeichenartiger Struktur vorgeschlagen, welches unter einem Rekonstruktionseinfallwinkel einfallendes Licht bei einer Rekonstruktion in einen Rekonstruktionsausfallwinkel reflektiert und/oder beugt, wobei das Hologramm mindestens zwei Regionen umfasst, die aus unterschiedlich großen Winkelbereichen um den Rekonstruktionseinfallwinkel einfallendes Licht der in entsprechende unterschiedlich große Winkelbereiche um den Rekonstruktionsausfallwinkel reflektieren.

Aus der 5,583,668 A ist eine Technik zum festen Positionieren eines holografischen Aufzeichnungslaminats auf einem Hologrammmaster beschrieben, welche elektrostatische Ladung zum Fixieren des holografischen Aufzeichnungsmaterials auf einem Hologrammmaster nutzt.

Aus der US 4,715,670 A ist ein Verfahren zum Kopieren eines holografischen Beugungsgitters bekannt, bei dem das Mastergitter und das Kopiergitter starr aneinander befestigt und ein bewegbarer Spiegel verwendet wird, um das Hologramm sukzessive zu belichten.

Aus der US 2011/0214804 A1 sind ein Verfahren und eine Vorrichtung bekannt, ein Volumentransmissionshologramm und/oder ein Volumenreflexionshologramm mittels eines Films, bestehend aus einer Grundfolie und einer holographischen Schicht, herzustellen. Beim Verfahren wird der Film über eine Trommel geleitet, auf der der Film mit einem Masterhologramm in Kontakt gebracht wird. Das Masterhologramm und der Film werden gemeinsam durch die Belichtungszone bewegt, in der sie von einem Laser belichtet werden.

Aus der US 4,416,540 ist eine Vorrichtung und ein Verfahren bekannt, holographische Kopien eines Hologrammfilms über Kontaktkopien herzustellen.

Aus der EP 0 401 566 A2 ist ein Verfahren und ein System zur Herstellung von Reflexionshologrammen über eine zylindrische Oberfläche eines Hologrammmasters bekannt.

Aus der US 2015/0250119 A1 ist ein Verfahren zum Herstellen eines Volumenhologrammbildes bekannt, bei dem ein holographisches Medium, welches einen photosensitiven Farbstoff umfasst, von einer Vielzahl kohärenter Lichtquellen, welche bei einer Wellenlänge emittieren, bei der der Farbstoff sensitiv ist, belichtet wird. Dadurch werden Interferenzstreifenmuster ausgebildet. Die erzeugten Interferenzstreifenmuster können, müssen aber nicht, ein Bild oder eine kodierte Information umfassen. Ausgewählte Bereiche der Interferenzstreifenmuster werden anschließend belichtet mit photochemisch wirksamer Strahlung, so dass der photoaktive Teil teilweise oder ganz gebleicht, entfernt oder deaktiviert wird und ein holographisches Muster in den Bereichen des Interferenzstreifenmusters ausgebildet wird, die nicht gebleicht, entfernt oder deaktiviert wurden.

Aus der US 2010/328741 A1 ist eine Vorrichtung bekannt, wobei die Vorrichtung ein Authentifizierungshologramm innerhalb eines definierten Volumens eines holographischen Aufzeichnungsmediums umfasst, und das Authentifizierungshologramm ausgebildet ist, Authentifizierungsinformation zu vermitteln. Das Authentifizierungshologramm umfasst eine Vielzahl von zugehörigen Volumenhologrammen in dem definierten Volumen. Das holographische Aufzeichnungsmedium umfasst ein optisch transparentes Kunststoffmaterial und einen photochemisch aktiven Farbstoff. In einer Ausführungsform sind die Hologramme identisch, in einer weiteren Ausführungsform sind die Hologramme unterschiedlich.

Aus der GB 2 457 727 A ist ein Verfahren zum Verarbeiten eines Hologramms bekannt, wobei ein holographisches Bild in einer von einer Substratschicht getragenen Photopolymerschicht ausgebildet wird.

Aus der US 2007/206248 A1 sind ein Verfahren und eine Vorrichtung zur Überprüfung von Daten bekannt. Insbesondere handelt es sich dabei um holographische Datenträger und eine Vorrichtung zur Schaffung von solchen Datenträgern und Verfahren zum Überprüfen von Daten, die auf holographischen Datenträgern gespeichert werden.

Aus der WO 2009/056358 A1 ist ein Verfahren und eine Vorrichtung zum Herstellen eines Hologramms, insbesondere als Sicherheitsmerkmal, sowie ein Hologramm bekannt. Beschrieben wird ein Verfahren zum Herstellen eines individualisierten Hologramms, bei dem kohärentes Licht erzeugt und räumlich gemäß einem Individualisierungsmuster moduliert wird. Dieses modulierte Licht wird zum Belichten eines Hologramms vorzugsweise in der Weise genutzt, dass das holografische Aufzeichnungsmaterial mit dem kohärenten modulierten Licht durchstrahlt wird und zumindest ein Teil des kohärenten modulierten Lichts an einem Hologrammmaster reflektiert oder gebeugt wird, um mit dem das holografische Aufzeichnungsmaterial durchstrahlenden kohärenten Licht zu interferieren und so das Hologramm in das Aufzeichnungsmaterial zu belichten, wobei mittels des Hologrammmasters, ein in dem Hologrammmaster gespeichertes Hintergrundmuster, dem die kodierten Individualisierungsinformationen umfassenden modulierten kohärenten Licht beim Reflektieren oder Beugen an dem Hologrammmaster aufgeprägt wird, so dass das Hintergrundmuster gemeinsam mit den Individualisierungsinformationen in das Hologramm gespeichert wird.

Aus der DE 198 09 502 A1 ist eine Vorrichtung bekannt, welche zur Herstellung einer Kontaktkopie eines Hologramms dient. Um das Kontakthologramm einfach und schnell herstellen zu können, ist ein Flachbett vorgesehen, auf das ein Masterhologramm auflegbar ist, sowie eine Andrückeinrichtung zum Andrücken eines holographischen Films auf das Masterhologramm. Zum Belichten des Masters und des Films ist eine Belichtungseinrichtung vorhanden.

Aufgabe der Erfindung ist es daher, ein verbessertes Verfahren zur Herstellung einer Kennzeichnung eines Verbundkörpers mit einem Hologramm, insbesondere einem individualisierten Hologramm, anzugeben sowie eine hierfür geeignete Vorrichtung.

### Grundidee der Erfindung

Der Erfindung liegt die Idee zugrunde, in den Verbundkörper zunächst eine photoempfindliche Substratschicht zu integrieren, die nach dem Ausbilden des Verbundkörpers zumindest in einem Bereich nach wie vor durch einen Laser grafisch markierbar ist. Dies bedeutet, dass die in den Verbundkörper integrierte photoempfindliche Substratschicht zumindest in einem Bereich nach der Integration in den Verbundkörper photoempfindlich und holografisch belichtbar ist, und das einbelichtete Hologramm auf einfache Weise entwickelt und/oder fixiert werden kann. Um ein solches Hologramm in die photoempfindliche Schicht zu belichten, wird ein als Folie ausgebildeter Master verwendet, der auf den Verbundkörper anliegend an dessen Vorderseite aufgebracht wird. Die gute Anpassungsfähigkeit des als Folie ausgebildeten Masters an den Verbundkörper gewährleistet eine hochqualitative Herstellung einen Hologramms in dem Verbundkörper. Der Master umfasst mindestens eine die Lichtausbreitung beeinflussende Struktur. Die die Lichtausbreitung beeinflussende Struktur kann vorzugsweise ein Hologramm umfassen oder sein. Es sind jedoch auch andere beugende oder die Lichtausbreitung beeinflussende Strukturen, wie beispielsweise aus einzelnen reflektierenden Facetten bestehende Strukturen und Ähnliches einsetzbar. Notwendig ist eine Ausbildung als Folie um eine Anpassung an die Vorderseite des Verbundkörpers in optimaler Weise zu ermöglichen.

### Bevorzugte Ausführungsformen

Um die anschließende Einbelichtung des Hologramms selbst auszuführen, ohne einen Qualitätsverlust des Hologramms selbst hinnehmen zu müssen, werden ein Verfahren und eine Vorrichtung vorgeschlagen, bei denen auf dem Verbundkörper, in dem die photoempfindliche Schicht integriert ist, der Master, dessen optische Struktur kopiert werden soll, beispielsweise ein mindestens ein Hologramm umfassender Master, auf den Verbundkörper aufgebracht wird, wobei dieser Master in Form einer Folie, beispielsweise eines mit einem Hologramm belichteten Films, ausgebildet ist, und sich somit an den Verbundkörper anpassen kann. Insbesondere wird ein Verfahren zur nachträglichen holografischen Kennzeichnung eines Verbundkörpers für ein Sicherheitsdokument vorgeschlagen, welches die Schritte umfasst: Bereitstellen oder Herstellen des Verbundkörpers, der eine zumindest in einem Bereich photoempfindliche Hologrammschicht umfasst; Anordnen des Verbundkörpers in einer Halterung; Belichten des Verbundkörpers mit kohärenter Strahlung, die in dem photoempfindlichen Bereich der Hologrammschicht interferiert, um eine holografische Information in dem photoempfindlichen Bereich der Hologrammschicht zu belichten; Fixieren des belichteten Hologramms in der Hologrammschicht.

Vorzugsweise umfasst der Master mindestens ein Hologramm. Der Master kann beispielsweise ein Film mit einem darin ausgebildeten Volumenhologramm sein. Es sind jedoch auch andere Hologrammtypen oder Kombinationen von mehreren Hologrammen und Hologrammtypen, beispielsweise Oberflächenhologrammen und Volumenhologrammen möglich. Ein belichteter Film ist eine Folie.

Ein entsprechender Verbundkörper ist ein aus mehreren Materialschichten gebildeter Verbundkörper, der eine Materialschicht aufweist, welche zumindest in einem Bereich photoempfindlich ist und für eine Einbelichtung eines Hologramms geeignet ist.

Bei dem Verbundkörper handelt es sich vorzugsweise um einen Sicherheitsdokumentenrohling, der bis auf eine Individualisierung ein körperlich fertig gestelltes Sicherheitsdokument ist. Gegebenenfalls ist zusätzlich noch ein Einfügen in ein Büchlein notwendig, wenn es sich bei dem Sicherheitsdokumentenrohling um einen Passkartenrohling handelt.

Der Verbundkörper weist vorzugsweise eine Steifigkeit auf, dass unter Einfluss der Schwerkraft keine Verformung der Vorderseite auftritt, während der Verbundkörper an zwei einander gegenüberliegenden Seiten kanten aufliegt. Gebräuchliche Verbundkörper für Sicherheitsdokumente im ID-1- bis ID-3-Format, die auf Kunststoffbasis oder überwiegend auf Kunststoffbasis hergestellt sind, weisen diese Eigenschaft auf.

Eine entsprechende Vorrichtung zum holografischen Kennzeichnen eines Verbundkörpers für ein Sicherheitsdokument umfasst unter anderem:
Eine Halterung zum Aufnehmen des Verbundkörpers; eine Beleuchtungseinrichtung, welche kohärentes Licht zur Belichtung einer in dem zu kennzeichnenden Verbundkörper integrierten zumindest in einem Bereich photoempfindlichen Hologrammschicht bereitstellt, wobei die Belichtungsseinrichtung ausgebildet ist, das Licht auf den in oder auf der Halterung angeordneten Verbundkörper zu richten. Ein besonderer Vorteil der Erfindung ist es, dass die holografische Belichtung in den normalen Produktionsprozess integriert werden kann.

Bei einer Ausführungsform wird in den Verbundkörper als Teil der holografischen Information eine eine Lichtausbreitung beeinflussende Struktur eines Masters eingebracht. Hierzu ist vorgesehen, den Master als Folie auszubilden und bereitzustellen. Dies bietet den Vorteil, dass im Gegensatz zu der sonst üblichen Kontaktkopietechnik, bei der der Film auf dem Master aufgelegt wird, in diesem Fall der Master auf das zu belichtende Werkstück, hier den Verbundkörper, aufgelegt wird. Entscheidend hierbei ist, dass der als Folie bereitgestellte Master die Eigenschaft aufweist, sich an die Oberfläche des Verbundkörpers anpassen zu können. Denn selbst wenn sowohl der Verbundkörper als auch der Master als Körper mit ebener Oberfläche ausgebildet sind, kann kein für ein Kontaktkopierverfahren optimaler Kontakt hergestellt werden. Es hat sich gezeigt, dass zwei plane Oberflächen steifer und nicht flexibler Körper in der Regel nicht optimal miteinander in Kontakt gebracht werden können, ohne dass hier zwischen Gaseinschlüsse auftreten oder doch leicht variierende Abstände der Oberflächen aufgrund von Oberflächenunebenheiten oder Ähnlichem auftreten. Solche Gaseinschlüsse oder variierende Abstände sind jedoch für den Kopiervorgang der Masterstrukturen nachteilig. Wird der Master als Folie ausgebildet, wie es hier vorgeschlagen wird, so können diese Probleme, die sich beim Anordnen von zwei starren Oberflächen ergeben würden, beseitigt werden. An die Oberflächenbeschaffenheit des Verbundkörpers für ein Sicherheitsdokument sind lediglich dieselben Anforderungen wie an fertige Sicherheitsdokumente zu stellen, und die etwa auftretenden Materialtoleranzen oder Ähnliches werden durch den als Folie, beispielsweise als belichteter Film, ausgebildeten holografischen Master ausgeglichen.

Ein Verfahren sieht daher vor, das anliegend an eine Vorderseite des Verbundkörpers ein als Folie ausgebildeter Master aufgebracht wird, wobei der Master mindestens eine eine Lichtausbreitung beeinflussende Struktur umfasst und die die Lichtausbreitung beeinflusste Struktur als Kontaktkopie beim Belichten in den photoempfindlichen Bereich der Hologrammschicht kopiert wird. Eine Vorrichtung sieht daher vor, dass eine Masterapplizierungsvorrichtung zum Auflegen eines als Folie ausgebildeten Masters, der eine eine Lichtausbreitung beeinflussende Struktur umfasst, auf die Vorderseite eines in der Halterung angeordneten Verbundkörpers vorgesehen ist.

Als die die Lichtausbreitung beeinflussende Strukturen kommen insbesondere holografische Strukturen, besonders bevorzugt volumenholografische Strukturen in Betracht. Beispielsweise kann es sich bei einem solchen Volumenhologramm um das Volumenhologramm einer Streuscheibe oder Mattscheibe handeln. Ebenso ist es jedoch möglich, dass auch nicht beugende Strukturen, beispielsweise aus einzelnen reflektierenden Facetten bestehende Strukturen wie beispielsweise Sägezahnspiegel, wie sie in der DE 20 2007 006 796 U1 beschrieben, zu nutzen.

Bei dem Master kann es sich insbesondere um einen als Folie ausgebildeten Mehrschichtkörper handeln, bei dem beispielsweise mehrere unterschiedliche Hologrammfilme übereinander geschichtet zu einem Masterfilm verbunden sind. Wesentlich ist hierbei, dass der Master eine sehr viel bessere Oberflächenanpassbarkeit als der Verbundkörper aufweist, aus dem ein Sicherheitsdokument gefertigt wird. So lässt sich ein Master beispielsweise bei gleichem Kraftaufwand beschädigungsfrei stärker krümmen als ein entsprechender Verbundkörper. Typische Verbundkörper, wie sie heutzutage für Sicherheitsdokumente eingesetzt werden, weisen beispielsweise nur eine recht geringe Biegefähigkeit auf. Diese werden beispielsweise typischerweise aus mehreren Polycarbonatschichten gefertigt, die bei einer Gesamtverbundstärke von etwa 760 µm eine solche Steifigkeit aufweisen, dass beispielsweise hieraus gefertigte Sicherheitsdokumente der Standardgröße ID1, sofern sie an einer kurzen Seitenkante gehalten werden, im Gravitationsfeld nahezu keine Krümmung aufweisen, wenn diese planparallel zum Erdboden orientiert gehalten werden.

Ein Master, der als Folie, beispielsweise als belichteter Film, ausgebildet ist, nimmt jedoch bei gleicher Größe eine deutlich gekrümmte Oberflächenform an und knickt gegebenenfalls ab.

Als besonders vorteilhaft hat es sich erwiesen, dass der als Folie ausgebildete Master mittels einer Walze an den Verbundkörper vor dem Belichten angedrückt wird. Hierdurch wird sichergestellt, dass ein inniger Kontakt zwischen dem Master und dem Verbundkörper gebildet ist. Über das Verwenden einer Walze kann sichergestellt werden, dass gegebenenfalls vorhandene Gaseinschlüsse zuverlässig entfernt werden. Eine bevorzugte Ausführungsform der Vorrichtung sieht daher vor, dass eine steuerbare bewegliche Walze, welche ausgebildet ist, den Master über ein Abrollen der Walze nach dem Auflegen des Masters oder bei dem Auflegen des Masters auf die Vorderseite des Verbundkörpers an diese Vorderseite anzudrücken, vorgesehen ist.

Während bei einer Transmissionshologrammstruktur, die in den Verbundkörper belichtet wird, die Notwendigkeit besteht, dass das zur Rekonstruktion verwendete Licht durch den Verbundkörper hindurch transmittierbar ist, ist es bei einer Ausbildung eines Reflexionshologramms notwendig, dass der Verbundkörper für die Lichtwellenlänge transparent ist, mittels derer die Belichtung des Hologramms erfolgt. Angemerkt wird an dieser Stelle, dass die Wellenlänge, mit der die Belichtung ausgeführt wird, und die Wellenlänge, mit der die Rekonstruktion ausführbar ist, sich häufig geringfügig unterscheiden, da bei dem Entwicklungs- und/oder Fixierschritt, der nach dem Belichten des Hologramms in die Hologrammschicht vorgenommen wird, häufig eine Schrumpfung des Materials stattfindet, die auch eine Größenänderung der einbelichteten Interferenzstrukturen mit sich bringt. Diese Größenänderung geht mit einer "Wellenlängenverschiebung" zwischen dem zum Belichten verwendeten Licht und dem zur Rekonstruktion nutzbaren Licht einher.

Ausreichend ist es, wenn der Verbundkörper jeweils für einen schmalbandigen Wellenlängenbereich um die entsprechende Belichtungswellenlänge bzw. Rekonstruktionswellenlänge transparent ist. Gemäß einer erfindungsgemäßen Ausführungsform wird somit der Verbundkörper so hergestellt oder bereitgestellt, dass der Verbundkörper in dem Abschnitt, in dem der photoempfindliche Bereich der Hologrammschicht angeordnet ist, für mindestens eine Wellenlänge transparent ist und die Belichtung des Verbundkörpers mit dem kohärenten Licht dieser Wellenlänge durch die Rückseite des Verbundkörpers erfolgt, die von der Vorderseite abgewandt ist, auf der der Master aufgebracht ist und mindestens eine die Lichtausbreitung beeinflussende Struktur das Licht zumindest der einen Wellenlänge zurückwirft, in dem photoempfindlichen Bereich der Hologrammschicht mit sich selbst interferiert, um die holografische Information in den photoempfindlichen Bereich der Hologrammschicht zu belichten. Bei einer solchen Ausführungsform wird ein in dem Kartenkörper gespeichertes Volumenreflexionshologramm erzeugt.

Um eine individualisierte Kennzeichnung vorzunehmen, wird das kohärente Licht bei einer Ausführungsform mittels eines räumlichen Lichtmodulators moduliert. Eine entsprechende Vorrichtung sieht daher vor, dass die Belichtungseinrichtung eine Individualisierungseinrichtung in Form eines räumlichen Lichtmodulators umfasst. Aus dem Stand der Technik sind unterschiedliche räumliche Lichtmodulatoren bekannt, die beispielsweise als sogenannter LCoS (Liquid Crystal on Silicon), als LCD-Schirm oder als Digital Mirror Device, eine Vorrichtung bei der Mikrospiegel ansteuerbar sind, ausgebildet sind. Dem Fachmann sind die unterschiedlichen Verfahren und Möglichkeiten zur räumlichen Lichtmodulation bekannt, so dass diese hier nicht detailliert beschrieben werden.

Um eine gute Fixierung des Verbundkörpers und/oder des als Folie, beispielsweise in Form eines belichteten Films, bereitgestellten Masters zu erreichen, ist bei einer Ausführungsform des Verfahrens vorgesehen, dass der Verbundkörper über in einer Halterung ausgebildete Sauglöcher angeordnet wird, in denen ein Unterdruck gegenüber dem Umgebungsdruck der Halterung geschaffen wird, um den Verbundkörper an der Halterung zu halten und/oder zu fixieren und nach dem Belichten an den Sauglöchern ein Druckausgleich oder ein Überdruck gegenüber dem Umgebungsdruck herbeigeführt wird, und der Verbundkörper aus der Halterung entfernt wird. Ebenso können zusätzlich oder alternativ Sauglöcher in der Halterung benachbart zu einer Aussparung vorgesehen sein, in der der Verbundkörper angeordnet wird. Hierdurch ist es möglich, alternativ oder zusätzlich auch den über der Vorderseite des Verbundkörpers angeordneten als Folie ausgebildeten Master anzusaugen und zu fixieren.

Bei einer Ausführungsform erfolgt das Erzeugen des Unterdrucks an Sauglöchern, welche den als Folie ausgebildeten holografischen Master ansaugen, zeitversetzt und korreliert mit einer Bewegung der Walze, die die Folie an den Verbundkörper andrückt. Ein Unterdruck wird nur in jenen Bereichen der Halterung erzeugt, gegen die der holografische Film bereits durch die Walze angedrückt ist.

Als besonders vorteilhaft hat es sich erwiesen, den als Folie, beispielsweise in Form eines belichteten Films, ausgebildeten Master nicht nur unmittelbar auf der Vorderseite des Verbundkörpers anliegen zu lassen, sondern zusätzlich auf einer Auflagefläche der Halterung. In einer Ausführungsform umfasst somit die Halterung eine ebene Auflagefläche mit einer Aussparung, welche an eine Form des Verbundkörpers angepasst ist. Weiterhin ist es von Vorteil, wenn in der Aussparung der Auflagefläche eine Anlageplatte angeordnet ist, wobei die Anlageplatte parallel zur Oberflächennormale der Auflagefläche bewegbar ist, sodass eine Vorderseite eines mit einer der Vorderseite gegenüberliegenden Rückseite anliegend auf der Anlageplatte angeordneten Verbundkörpers bündig mit der Auflagefläche abschließt. Die in der Aussparung befindliche Anlageplatte kann somit Materialstärkenschwankungen des Verbundkörpers so ausgleichen, dass die Vorderseite des Verbundkörpers jeweils bündig mit der Auflagefläche abschließt. Somit wird der Verbundkörper in einer Aussparung einer Auflageplatte angeordnet, wobei die Aussparung an die Form des Verbundkörpers angepasst ist und die Anordnung so erfolgt, dass eine Vorderseite des Verbundkörpers bündig mit der Auflagefläche abschließt. Die Anlageplatte, die sich in der Aussparung befindet, kann beispielsweise als beweglicher Stempel ausgebildet sein.

Als besonders vorteilhaft hat es sich erwiesen, den als Folie ausgebildeten Master mit einer flächigen Ausdehnung herzustellen, welche größer als die flächige Ausdehnung der Vorderseite des Verbundkörpers über dem photoempfindlichen Bereich ist, so dass der als Folie ausgebildete Masters nach dem Aufbringen auf die Vorderseite des Verbundkörpers teilweise an der Auflagefläche der Halterung anliegt. Vorzugsweise liegt der Master umlaufend um eine äußere Kontur des Verbundkörpers gegen die Auflagefläche an.

Um ein Reflexionsvolumenhologramm in die Hologrammschicht zu belichten, ist es notwendig, dass die Anlageplatte eine die Anlageplatte quer zur Anlagefläche durchdringende Aussparung aufweist oder zumindest teilflächig transparent für mindestens eine Wellenlänge des Lichts ist, welches von der Belichtungseinrichtung zur Belichtung bereitgestellt wird. Die Anlageplatte kann beispielsweise aus einem transparenten Material, beispielsweise Glas oder Ähnlichem, hergestellt werden und an einem umlaufenden Rand eine Halterungsstruktur aufweisen, über die eine Höheregulierung der gesamten Anlageplatte relativ zur Oberfläche der Auflagefläche realisierbar ist.

Eine Einbelichtung der holografischen Information erfolgt häufig nicht zeitgleich vollflächig sondern über ein abtastendes Überstreichen des zu kopierenden Masters mit dem kohärenten Licht. Bei einer Ausführungsform umfasst daher die Belichtungseinrichtung eine Ablenkeinrichtung, welche ein Überstreichen des kohärenten Lichts über ein Gebiet der Halterung, das für die Aufnahme des Verbundkörpers vorgesehen ist und gegebenenfalls zusätzlich ein Überstreichen über den räumlichen Lichtmodulator bewirkt. Auch der räumliche Lichtmodulator, der beispielsweise flächig ausgebildet ist, wird häufig abtastend durch das Licht überstrichen. Besonders bevorzugt werden Ausführungsformen, bei denen das kohärente Licht, welches vorzugsweise mittels eines Lasers der Belichtungseinrichtung erzeugt ist, entlang einer Raumrichtung aufgeweitet wird und somit eine Zeile oder Spalte der holografischen Information zeitgleich individualisiert und in die Hologrammschicht des Verbundkörpers einbelichtet wird.

Der photoempfindliche Bereich der Hologrammschicht kann, muss jedoch nicht, die gesamte Oberfläche des Verbundkörpers überdecken. Notwendig ist es lediglich, dass der photoempfindliche Bereich der Hologrammschicht bis zu einer Belichtung vor Licht der Wellenlänge geschützt wird, welche zum Einbelichten der holografischen Struktur nutzbar ist. Ist die Hologrammschicht beispielsweise mittels grünen und/oder roten Lichts belichtbar, so ist diese vor einer Einstrahlung von Licht im roten und grünen Wellenlängenbereich zu schützen. Dies kann beispielsweise durch eine opake Beschichtung für die entsprechenden Wellenlängenbereiche erfolgen. Eine andere Möglichkeit besteht darin, das Herstellungsverfahren und die Handhabung des Verbundkörpers vor und während des Belichtens in einer Dunkelkammer oder einem Raum auszuführen, in dem nur schmalbandiges Licht einer Wellenlänge auftritt, welches nicht in der Lage ist, die Hologrammschicht zu belichten. Für photoempfindliches Material, welches im grünen und roten Wellenlängenbereich lichtempfindlich ist, eignet sich beispielsweise orangefarbenes Umgebungslicht, welches zumindest bei geringen Lichtintensitäten nicht geeignet ist, um das photoempfindliche Material zu belichten.

Bei der Ausbildung des Verbundkörpers ist es möglich, als Hologrammschicht eine Schicht zu verwenden, die bereits vor dem Integrieren in den Verbundkörper teilweise belichtet und gegebenenfalls auch bereits zum Teil fixiert ist. Dies bedeutet, dass in der Hologrammschicht insbesondere unveränderliche Hologrammstrukturen, die in jedes Sicherheitsdokument integriert werden, welches mit dem Verbund gefertigt werden soll, bereits in der Hologrammschicht enthalten sind, bevor diese in den Verbundkörper integriert werden. Eine solche Ausbildung der unveränderlichen Hologrammstrukturen kann über eine örtlich selektive Belichtung mittels einer Maske, die den für die spätere Belichtung vorgesehenen Bereich vor Belichtung schützt, oder über gezielte Belichtung einzelner Bereiche, die die unveränderlichen Hologrammstrukturen enthalten, mittels eines räumlichen Lichtmodulators erfolgen. Als räumliche Lichtmodulatoren eigenen sich als Digital-Micromirror-Devices (DMD) oder als Liquid-Crystal-on-Silicon (LCoS) bekannte Vorrichtungen. Es ist jedoch auch möglich, dass solche unveränderlichen Hologrammstrukturen gemeinsam mit oder nachträglich nach den individualisierten Hologrammstrukturen in die Hologrammschicht belichtet werden.

Bevorzugt ist eine Anpassbarkeit oder Anpassungsfähigkeit des als Folie ausgebildeten Masters an eine gekrümmte und/oder unebene Oberfläche besser als die des Verbundkörpers bzw. der Vorderseite des Verbundkörpers. In der Regel weist der Verbundkörper eine Stabilität gegenüber einem Durchbiegen unter dem Einfluss der Schwerkraft auf, wenn dieser mit seiner flächigen Erstreckung parallel zur Erdoberfläche an gegenüberliegenden Rändern gehalten wird.

Allgemein ist eine Anpassbarkeit oder Anpassungsfähigkeit für einen Gegenstand und dessen Außenfläche umso höher und besser, je besser sich dieser mit seiner Außenfläche an die Oberflächenform einer gekrümmten und/oder unebenen Oberfläche anpassen kann, d.h. je geringer möglicherweise auftretende Gebietsflächen sind, an denen der Gegenstand beim einem In-Kontakt-Bringen des Gegenstands mit der gekrümmten und/oder unebenen Oberfläche nicht mit seiner Außenfläche an der gekrümmten und/oder unebenen Oberfläche anliegt, und je geringer die Abstände zwischen der Außenfläche des Gegenstands und der gekrümmten und/oder unebenen Oberfläche in diesen Gebietsflächen ist. Aus unebene Oberfläche kann beispielsweise eine Oberfläche genutzt werden, die wellig ist und die Welligkeit der Oberflächenform in einem Querschnittsprofil durch eine Sinus- oder Kosinus-Funktion beschreibbar ist. Beispielsweise kann eine Periodenlänge 1 cm und eine Amplitude von Maximum zu Minimum 2 mm betragen. Diese Werte sind lediglich beispielhaft genannt.

Der große Vorteil der Erfindung liegt auch darin, dass andere optische und/oder elektrische Personalisierungen des Verbundkörpers zeitgleich oder versetzt mit den Verfahrensschritten zum Einbelichten des Hologramms in den fertiggestellten Verbundkörper ausgeführt werden können. So können Personalisierungsschritte, beispielsweise ein Einschreiben von Informationen mittels Laserbeschriftung in Form von Schwärzungen, vor dem Belichten, zwischen dem Belichten und dem Fixieren und/oder nach dem Fixieren ausgeführt werden. Solches gilt ebenso für elektronische Personalisierungen, bei denen Daten beispielsweise in einen Mikrochip geschrieben werden oder Schaltungsstrukturen Individualisierung modifiziert werden.

Eine Integration der photoempfindlichen Substratschicht in den Verbundkörper erfolgt vorzugsweise mittels Lamination. Dieses bietet den Vorteil, dass eine Lamination ohne die Verwendung von Licht ausführbar ist und so eine unbeabsichtigte Belichtung der photoempfindlichen Substratschicht sicher verhindert wird. Die Laminationsparameter werden so gewählt, dass die Photoempfindlichkeit in dem Wellenlängenbereich, der für die Belichtung der nachträglich einzubringenden Hologrammstruktur nicht beeinträchtigt wird. Werden Folien aus Polycarbonat als Basismaterial für die Herstellung des Verbundkörpers verwendet, so werden Temperaturen im Bereich von 120°C bis 220 °C, bevorzugt Temperaturen im Bereich von 140 °C bi 200 °C und besonders bevorzugt im Bereich von 160 °C bis 180°C, bei der Lamination verwendet.

Eine andere Ausführungsform sieht die Verwendung von Heißkleber für die Integration der photoempfindlichen Substratschicht mit den übrigen Substartschichten in den Verbundkörper vor. Alternativ oder zusätzlich kann auch ein Kleber verwendet werden, der druckempfindlich ist. Insbesondere können die photoempfindliche Substratschicht und/oder die eine andere Substratschicht oder die mehreren anderen Substratschichten als Klebefolie oder Klebefolien ausgebildet sein.

Besteht die photoempfindliche Substratschicht aus einem photoempfindlichen Material, welches nicht im UV-Wellenlängenbereich sensitiv ist, können auch UV-härtbare Kleber eingesetzt werden, um die photoempfindliche Substratschicht mit den übrigen Substratschichten, aus denen der Verbundkörper gebildet ist, zu verbinden.

Der fertige Verbundkörper mit der zumindest in einem Bereich photoempfindlichen Hologrammschicht, ist vorzugsweise ein bis auf eine Personalisierung fertig ausgebildetes Sicherheitsdokument. Die Personalisierung kann neben dem Einbelichten eines Hologramms in die photoempfindliche Hologrammschicht auch zusätzlich andere Personalisierungsschritte und Personalisierungsverfahren umfassen, zum Beispiel eine Laserpersonalisierung bei der lokale Verfärbungen und/oder Demetallisierungen mittels eines Lasers bewirkt werden, eine elektrische Personalisierung, bei der Daten in einen Mikrochip eingespeichert werden, ein Beschriften eines Unterschriftenfeldes, usw. Diese unterschiedlichen Personalisierungsschritte und Personalisierungsverfahren können zeitgleich, vorgelagert oder nachgelagert oder sowohl vorgelagert und nachgelagert oder sogar sowohl vorgelagert, gleichzeitig und nachgelagert zu dem Einbringen des Hologramms erfolgen.

Nachfolgend wird die Erfindung unter Bezugnahme auf eine Zeichnung näher erläutert. Hierbei zeigen:
- Fig. 1: eine schematische Schnittansicht durch einen Verbundkörper mit einem photoempfindlichen Bereich einer Hologrammschicht; und
- Fig. 2: eine schematische Schnittansicht einer Vorrichtung zum holografischen Kennzeichnen eine Verbundkörpers.

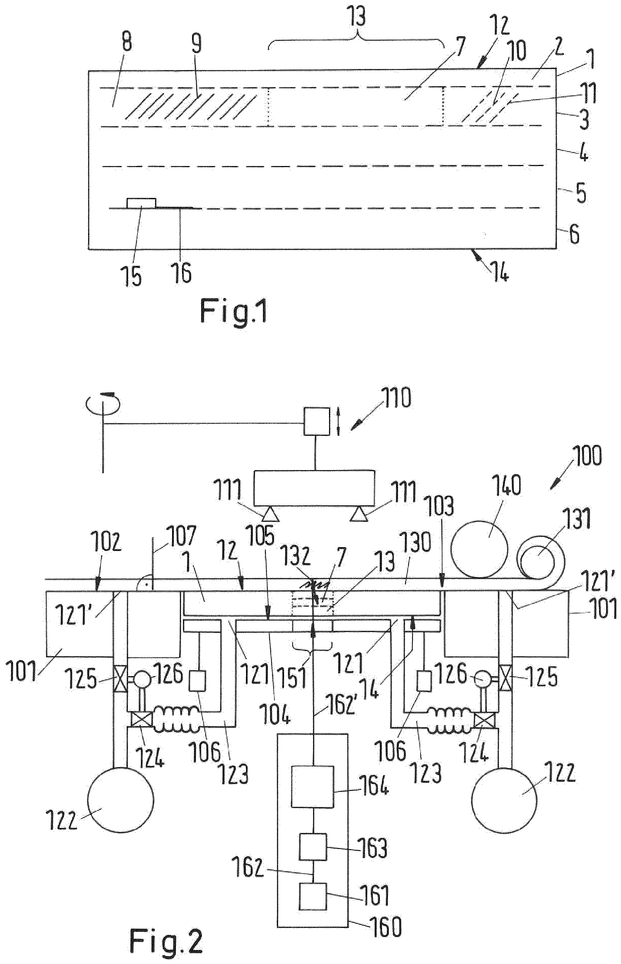

In Fig. 1 ist schematisch ein Verbundkörper 1 dargestellt, der für eine nachträgliche holografische Kennzeichnung geeignet ist. Der Verbundkörper ist aus mehreren Substratschichten 2 bis 6 beispielsweise in einem Laminationsverfahren zusammengefügt, wobei die mit dem Bezugszeichen 3 versehene Substratschicht eine sogenannte Hologrammschicht ist. Die Hologrammschicht 3 zeichnet sich dadurch aus, dass diese für ein Einbelichten von holografischen Strukturen geeignet ist. Zumindest in einem Bereich 7 ist die Hologrammschicht 3 auch im zusammengefügten Verbundkörper 1 photoempfindlich ausgebildet, so dass noch eine Belichtung eines Hologramms erfolgen kann.

Die Hologrammschicht 3 umfasst ferner einen weiteren Bereich 8, in dem bereits ein fertig belichtetes und fixiertes Hologramm 9 ausgebildet ist. Darüber hinaus ist in wieder einem anderen Bereich 10 eine Hologrammstruktur 11 einbelichtet, die jedoch noch nicht fixiert ist. Die Hologrammschicht 3 ist bevorzugt nahe einer der Oberflächen des Verbundkörpers 1, welche als Vorderseite 12 bezeichnet wird, angeordnet. Zum Schutz der Hologrammschicht 3 ist bei der dargestellten Ausführungsform eine dünne transparente Materialschicht 2 als oberste Schicht in dem Verbundkörper 1 vorgesehen. In einem Abschnitt 13 über und unter dem photoempfindlichen Bereich 7 ist der Verbundkörper 1 zwischen der Vorderseite 12 und der gegenüberliegenden Rückseite 14 entweder transparent für eine Wellenlänge ausgebildet, mit der eine Belichtung einer Hologrammstruktur in dem photoempfindlichen Bereich 7 der Hologrammschicht 3 möglich ist, oder transparent für die Wellenlänge des Rekonstruktionslichts der Hologrammstruktur, die in dem photoempfindlichen Bereich 7 der Hologrammschicht 3 einbelichtet wird, ausgebildet.

In dem Verbundkörper können eine Vielzahl von Sicherheitsmerkmalen ausgebildet und eine Vielzahl von Sicherheitselementen integriert sein. Exemplarisch ist ein Mikrochip 15 mit einer Antennenstruktur 16 als beispielhaftes Sicherheitselement dargestellt. Zwischen den einzelnen Substratschichten, aus denen die einzelnen Materialschichten 2 bis 6 des Verbundkörpers hervorgegangen sind, können Sicherheitsdrucke, Metallpatches oder Ähnliches eingebracht sein.

In Fig. 2 ist eine schematische Schnittansicht einer Vorrichtung 100 zur nachträglichen Kennzeichnung eines Verbundkörpers für ein Sicherheitsdokument dargestellt. Die Vorrichtung 100 umfasst eine Halterung 101 mit einer Auflagefläche 102. In der Auflagefläche 102 ist eine Aussparung 103 ausgebildet, in der eine Auflageplatte 104 mit einer Anlagefläche 105 ausgebildet ist. Die Auflageplatte 104 ist relativ zu der Auflagefläche 102 beweglich angeordnet und kann beispielsweise mittels Aktoren 106 gesteuert positioniert werden. Hierdurch wird die Anlagefläche 105, welche planparallel zur Auflagefläche 102 ausgerichtet ist, parallel zur Oberflächennormale 107 der Auflagefläche 102 bewegt.

Die Aussparung 103 ist hinsichtlich ihrer Form in der Auflagefläche 102 so ausgebildet, dass diese an eine Form eines Verbundkörpers 1, der nachträglich gekennzeichnet werden soll, angepasst ist. Dies bedeutet, dass zur Herstellung in der Halterung 101 ein Verbundkörper 1 zum nachträglichen Kennzeichnen in der Aussparung 103 so angeordnet wird, dass eine Rückseite 14 des Verbundkörpers 1 auf der Anlagefläche 105 der Anlageplatte 104 aufliegt.

Die Halterung 101 weist somit eine ebene Auflagefläche 102 mit einer Aussparung 103 auf. In dieser Aussparung ist eine Anlageplatte 104 angeordnet, die eine Anlagefläche 105 aufweist. Die Anlageplatte 104 mit Anlagefläche 105 ist gegenüber der Auflagefläche 102 beweglich und in der Aussparung 103 der Auflagefläche 102 angeordnet.

Ein Zuführen des Verbundkörpers 1 erfolgt beispielsweise mittels einer Greifermechanik 110, die mittels Saugnäpfen 111 das Dokument während einer Bewegung über und in die Aussparung 103 festhält und auf der Anlageplatte 104 absetzt. In der Anlageplatte 104 sind vorzugsweise Sauglöcher 121 ausgebildet, die gesteuert mit einem Unterdruckreservoir 122, beispielsweise einer Vakuumpumpe, verbindbar sind. Um dies gesteuert bewerkstelligen zu können, sind in Zuleitungen 123 beispielsweise Ventile 124 ausgebildet. Sind die Sauglöcher 121 mit dem Vakuumreservoir 122 verbunden, so wird der Verbundkörper 1 gegen die Anlagefläche 105 der Anlageplatte 104 gesaugt und dort fixiert.

Über die Aktoren 106 wird der Verbundkörper in der Aussparung 103 so positioniert, dass eine Vorderseite 12 des Verbundkörpers 1 bündig mit der Auflagefläche 102 der Halterung 101 abschließt. Anschließend wird ein als Folie ausgebildeter Master 130 mit der Vorderseite 12 des Verbundkörpers 1 in Kontakt gebracht. Dazu wird der als Folie ausgebildete Master 130 von einer Rolle 131 im dargestellten Beispiel von links nach rechts abgerollt.

Bevorzugt ist eine Anpassbarkeit oder Anpassungsfähigkeit des als Folie ausgebildeten Masters 130 an eine gekrümmte und/oder unebene Oberfläche besser als die des Verbundkörpers 1 bzw. der Vorderseite 12 des Verbundkörpers 1.

In der Regel weist der Verbundkörper 1 eine Stabilität gegenüber einem Durchbiegen unter dem Einfluss der Schwerkraft auf, wenn dieser mit seiner Vorderseite parallel zur Erdoberfläche an gegenüberliegenden Rändern gehalten wird.

Ein Durchbiegen des als Folie ausgebildeten Masters 130 unter Schwerkrafteinwirkung ist bezogen auf einen Abschnitt, der in seiner Ausdehnung der Ausdehnung der Vorderseite 12 des Verbundkörpers 1 entspricht, vorzugsweise größer als die des Verbundkörpers, sofern dieser überhaupt ein Durchbiegen zeigt.

Der als Folie ausgebildete Master 130 ist vorzugsweise so ausgebildet, dass seine flächige Ausdehnung größer als die Oberfläche der Vorderseite 12 des Verbundkörpers 1 ist, so dass der Master 130 zusätzlich auch an der Auflagefläche 102 anliegt. Mittels einer Walze 140, die nach dem Aufbringen des Masters 130 ebenfalls von links nach rechts über den Master 130 abgerollt wird, wird sichergestellt, dass der Master 130 fest an der Vorderseite 12 des Verbundkörpers 1 und auch an der Auflagefläche 102 anliegt und sich keine Gaseinschlüsse insbesondere zwischen der Vorderseite 12 des Verbundkörpers 1 und dem als Folie ausgebildeten Master 130 ergeben.

Um den Master an der Auflagefläche 102 zu fixieren, können dort weitere Sauglöcher 121' vorgesehen sein, die ebenfalls mit dem Vakuumreservoir 122 oder einem weiteren Vakuumreservoir bei anderen Ausführungsformen verbunden sind. Das Anlegen des Vakuums an die Sauglöcher 121' kann synchronisiert mit dem Abrollen des als Folie ausgebildeten Masters 130 und/oder synchronisiert mit dem Überstreichen durch die Walze 140 erfolgen. Hierbei wird ein Vakuum an den Sauglöchern 121' erzeugt, die bereits durch den Master 130 abgedeckt und/oder die Walze 140 überstrichen sind.

Die Anlageplatte 104 ist vorzugsweise vollflächig transparent ausgebildet, jedoch zumindest in einem Abschnitt 151 transparent für Lichtwellenlängen ausgebildet, die zum Belichten eines Hologramms in einem photoempfindlichen Bereich 7 einer Hologrammschicht 3 des Verbundkörpers 1 verwendet werden soll. Alternativ kann die Anlageplatte 104 im Abschnitt 151 eine als Durchgangsöffnung ausgebildete Aussparung aufweisen.

Die Vorrichtung 1 umfasst eine Belichtungseinrichtung 160, die Belichtungseinrichtung umfasst einen Laser 161 oder eine andere Lichtquelle, welche kohärentes Licht 162 erzeugt. Das kohärente Licht 162 wird auf eine Ablenkeinrichtung 163 geführt, die dafür sorgt, dass das kohärente Licht einen räumlichen Lichtmodulator 164 abtastet. Vorzugweise umfasst die Belichtungseinrichtung 160 Optikelemente, die das Licht 162 entlang einer Raumrichtung aufweitet, so dass ein streifenartiger Lichtstrahl den räumlichen Lichtmodulator 164 überstreicht. Das aus dem räumlichen Lichtmodulator austretende Licht 162' tritt durch den transparenten Abschnitt 151 der Anlageplatte 104 und durch den transparenten Abschnitt 13 des Verbundkörpers 1. Hierbei durchquert das kohärente Licht 162' auch den photoempfindlichen Bereich 7. An dem Master 130 wird das kohärente Licht 162 durch eine eine Lichtausbreitung beeinflussende Struktur 132, beispielsweise ein Volumenreflexionshologramm einer Streuscheibe, in den photoempfindlichen Bereich 7 der Hologrammschicht 3 des Verbundkörpers 1 zurückgeworfen und interferiert dort mit dem aus der Belichtungseinrichtung 160 kommenden kohärenten Licht 162'. Hierdurch wird in dem photoempfindlichen Bereich 7 ein über die räumliche Lichtmodulation des räumlichen Lichtmodulators 164 individualisierten Hologramm der Streuscheibe in den Verbundkörper 1 einbelichtet. Nach dem Einbelichten wird der als Folie ausgebildete Master 130 von der Vorderseite 12 abgenommen, beispielsweise indem an den Sauglöcher 121' ein Druckausgleich oder leichter Überdruck durch ein Öffnen von Ventilen 125 und gegebenenfalls ein Verbinden mit einem Überdruckreservoir 126 hergestellt wird und der Master 130 auf die Rolle 131 mit einer Bewegung der Rolle 131 von rechts nach links aufgerollt wird und von der Vorderseite 12 des Verbundkörpers 1 abgenommen wird. Anschließend wird der Verbundkörper 1 mittels der Greifermechanik 110 aus der Halterung 101 entfernt, nachdem über die Ventile 124 ein Druckausgleich oder ein Überdruck an den Sauglöchern 121 hergestellt ist, und einer Entwicklung/Fixierung zugeführt. Eine solche kann über Wärmeeinwirkung oder Einstrahlung von ultravioletten Licht oder Ähnlichem erfolgen.

Zeitgleich oder zeitversetzt mit einigen der beschriebenen Schritte können auch weitere Kennzeichnungen, z.B. ein Einschreiben von individualisierten Daten in den Mikrochip, erfolgen oder auch eine Laserpersonalisierung in Form einer teilweisen Karbonisierung anderer Materialschicht des Verbundkörpers oder Ähnliches ausgeführt werden.

Es versteht sich für den Fachmann, dass hier lediglich eine beispielhafte Ausführungsform beschrieben ist. Insbesondere ist die Anfertigung einer Kontaktkopie eines Volumenreflexionshologramms beschrieben. Hier wird erneut angemerkt, dass der Master 130 nicht zwangsweise ein Volumenreflexionshologramm enthalten muss, sondern auch andere lichtzurückwerfende Strukturen enthalten kann. Bei einer, nicht beanspruchten, Einbelichtung eines Transmissionshologramms erfolgt die Belichtung durch die Vorderseite des Verbundkörpers und ist eine Transparenz der Auflagefläche nicht notwendig, da das Licht zum Ausbilden des Hologramms ausschließlich über die Vorderseite in den Verbundkörper eingestrahlt wird. Bei einer solchen Ausführungsform ist somit die Beleuchtungseinrichtung auf der entgegengesetzten Seite angeordnet als dies in Fig. 2 schematisch dargestellt ist.

### Bezugszeichenliste

- 1: Verbundkörper
- 2: Materialschichten (welche mit ursprünglichen Substratschichten korrespondieren)
- 3: Hologramm-/Materialschicht
- 3-6: Materialschichten (die mit Substratschichten korrespondieren)
- 7: photoempfindlicher Bereich
- 8: weiterer Bereich
- 9: belichtetes, fixiertes Hologramm
- 10: anderer Bereich
- 11: Hologrammstruktur (nur belichtet, nicht fixiert)
- 12: Vorderseite
- 13: Abschnitt (transparent)
- 14: Rückseite
- 15: Mikrochip
- 16: Antenne
- 100: Vorrichtung zum nachträglichen holografischen Kennzeichnen eines Verbundkörpers
- 101: Halterung
- 102: Auflagefläche
- 103: Aussparung
- 104: Anlageplatte
- 105: Anlagefläche
- 106: Aktoren
- 107: Oberflächennormale der Auflagefläche
- 110: Greifermechanik
- 111: Saugnäpfe
- 121, 121': Sauglöcher
- 122: Vakuumreservoir
- 123: Zuleitungen
- 124: Ventile
- 125: Ventile
- 126: Überdruckreservoir
- 130: Master
- 131: Rolle
- 132: eine Lichtausbreitung beeinflussende Struktur
- 140: Walze
- 151: Abschnitt (transparent)
- 160: Belichtungseinrichtung
- 161: Laser
- 162, 162': kohärentes Licht
- 163: Ablenkeinrichtung
- 164: räumlicher Lichtmodulator

## Patentansprüche

1. Verfahren zur holografischen Kennzeichnung eines Verbundkörpers (1) für ein Sicherheitsdokument umfassend die Schritte:
Bereitstellen oder Herstellen des Verbundkörpers (1), der eine zumindest in einem Bereich (7) photoempfindliche Hologrammschicht (3) umfasst;
Anordnen des Verbundkörpers (1) in einer Aussparung (103) einer Halterung (101), wobei die Halterung (101) eine ebene Auflagefläche (102) mit der Aussparung (103), welche an die Form des Verbundkörpers (1) angepasst ist, aufweist und wobei in der Aussparung (103) eine Anlageplatte (104) mit einer Anlagefläche (105) für eine Rückseite (14) des Verbundkörpers (1) angeordnet ist;
Belichten des Verbundkörpers (1) mit kohärentem Licht (162), das in dem photoempfindlichen Bereich (7) der photoempfindlichen Schicht interferiert, um eine holografische Information in den Bereich (7) der photoempfindlichen Hologrammschicht (3) zu belichten;
Fixieren des belichteten Hologramms in der photoempfindlichen Hologrammschicht (3), wobei anliegend an eine Vorderseite (12) des in der Aussparung (103) der Halterung (101) angeordneten Verbundkörpers (1) ein als Folie ausgebildeter Master (130) durch eine Masterappliziereinrichtung aufgebracht wird, in der der als Folie ausgebildete Master (130) mit einer Rolle (131) über den Verbundkörper (1) abgerollt wird, wobei der Master (130) mindestens eine die Lichtausbreitung beeinflussende Struktur (132) umfasst und die mindestens eine die Lichtausbreitung beeinflussende Struktur (132) als Kontaktkopie beim Belichten in den photoempfindlichen Bereich (7) der Hologrammschicht (3) kopiert wird, und wobei der Verbundkörper (1) so hergestellt oder bereitgestellt wird, dass der Verbundkörper (1) in einem Abschnitt (13) des photoempfindlichen Bereichs (7) der Hologrammschicht (3) für mindestens eine Wellenlänge des kohärenten Lichts (162) transparent ist, und die Belichtung des Verbundkörpers (1) mit dem kohärenten Licht (162) dieser Wellenlänge durch die Rückseite (14) des Verbundkörpers (1) in dem Abschnitt (13) des photoempfindlichen Bereichs und durch die Anlageplatte (104) der Halterung (101) erfolgt, die von der Vorderseite (12) des Verbundkörpers (1) abgewandt ist, auf die der Master (130) aufgebracht ist und an der das Licht (162) zumindest der einen Wellenlänge an der mindestens einen die Lichtausbreitung beeinflussenden Struktur (132) zurückgeworfen wird und in dem photoempfindlichen Bereich (7) der Hologrammschicht (3) mit sich selbst interferiert, um die holografische Information in die Hologrammschicht (3) zu belichten, wobei die Anlageplatte (104) in ihrer Anlagefläche (105) eine die Anlageplatte (104) durchdringende Aussparung (151) aufweist oder zumindest teilflächig transparent für die mindestens eine Wellenlänge des kohärenten Lichts (162) ist, welches von der Belichtungseinrichtung zur Belichtung bereitgestellt wird.

2. Verfahren nach Anspruch 1, **dadurch gekennzeichnet, dass** der als Folie ausgebildete Master (130) mittels einer Walze (140) an den Verbundkörper (1) vor dem Belichten angedrückt wird.

3. Verfahren nach Anspruch 1 oder 2, **dadurch gekennzeichnet, dass** die mindestens eine die Lichtausbreitung beeinflussende Struktur (132) eine Volumenhologrammstruktur ist.

4. Verfahren nach einem der vorangehenden Ansprüche, **dadurch gekennzeichnet, dass** das kohärente Licht (162) mittels eines räumlichen Lichtmodulators (164) moduliert wird.

5. Verfahren nach einem der vorangehenden Ansprüche, **dadurch gekennzeichnet, dass** der Verbundkörper (1) über in der Anlageplatte (104) der Halterung (101) ausgebildeten Sauglöchern (121) angeordnet wird, in denen ein Unterdruck gegenüber einem Umgebungsdruck der Halterung (101) geschaffen wird, um den Verbundkörper (1) an der Halterung (101) zu halten und/oder fixieren, und nach dem Belichten ein Druckausgleich mit oder ein Überdruck gegenüber dem Umgebungsdruck herbeigeführt wird, und der Verbundkörper aus der Halterung (101) entfernt wird.

6. Verfahren nach einem der vorangehenden Ansprüche, **dadurch gekennzeichnet, dass** der Verbundkörper (1) in der Aussparung (103) so angeordnet wird, dass seine Vorderseite (12) bündig mit der Auflagefläche (102) abschließt.

7. Verfahren nach einem der vorangehenden Ansprüche, **dadurch gekennzeichnet, dass** der Master (130) eine flächige Ausdehnung aufweist, welche größer als die flächige Ausdehnung der Vorderseite (12) des Verbundkörpers (1) über dem photoempfindlichen Bereich (7) ist, so dass der als Folie ausgebildete Master (130) nach dem Aufbringen auf die Vorderseite (12) des Verbundkörpers zumindest teilweise an der Auflagefläche (102) der Halterung (101) anliegt.

8. Verfahren nach einem der vorangehenden Ansprüche, **dadurch gekennzeichnet, dass** ein als belichteter Film ausgebildeter Master (130) verwendet wird, dessen Anpassbarkeit an eine gekrümmte und/oder unebene Oberfläche besser als die Anpassbarkeit der Vorderseite (12) des Verbundkörpers (1) ist.

9. Verfahren nach einem der vorangehenden Ansprüche, **dadurch gekennzeichnet, dass** Verbundkörper (1) als ein Sicherheitsdokumentenrohling bereitgestellt oder hergestellt wird, der bis auf eine Individualisierung und gegebenenfalls zusätzlich noch ein Einfügen in ein Büchlein ein körperlich fertiggestelltes Sicherheitsdokument ist.

10. Vorrichtung (100) zum holografischen Kennzeichnen eines Verbundkörpers (1) für ein Sicherheitsdokument umfassend:
eine Halterung (101) zum Aufnehmen des Verbundkörpers (1);
eine Beleuchtungseinrichtung (160), welche kohärentes Licht (162) zur Belichtung eines in dem zu kennzeichnenden Verbundkörper (1) integrierten photoempfindlichen Bereichs (7) einer Hologrammschicht (3) bereitstellt,
wobei die Belichtungseinrichtung (160) ausgebildet ist, das Licht (162) auf den in der Halterung (101) angeordneten Verbundkörper (1) zu richten, wobei eine Masterappliziereinrichtung zum Auflegen eines als Folie ausgebildeten Masters (130) auf die Vorderseite (12) des in der Halterung (101) angeordneten Verbundkörpers (1) vorgesehen ist, wobei in der Masterappliziereinrichtung der als Folie ausgebildete Master (130) mit einer Rolle (131) über dem Verbundkörper (1) abgerollt werden kann,
und wobei die Halterung (101) eine ebene Auflagefläche (102) mit einer Aussparung (103) aufweist, welche an die Form des Verbundkörpers (1) angepasst ist,
und wobei in der Aussparung (103) eine Anlageplatte (104) mit einer Anlagefläche (105) für eine Rückseite (14) des Verbundkörpers (1) angeordnet ist, und wobei die Anlageplatte (104) eine die Anlageplatte (104) in der Anlagefläche (105) durchdringende Aussparung (151) aufweist oder zumindest teilflächig transparent für mindestens eine Wellenlänge des Lichts (162) ist, welches von der Belichtungseinrichtung zur Belichtung des photoempfindlichen Bereichs (7) der Hologrammschicht (3) durch die die Anlageplatte (104) durchdringende Aussparung (151) oder durch die zumindest teilflächig transparente Anlageplatte (104) bereitgestellt wird.

11. Vorrichtung (100) nach Anspruch 10, **dadurch gekennzeichnet, dass** die Halterung (101) Sauglöcher (121) in der Anlageplatte (104) umfasst, um den Verbundkörper (1) an der Halterung (101) zu halten und/oder zu fixieren, und zusätzlich oder alternativ weitere Sauglöcher (121') benachbart zu der Aussparung (103) umfasst, um alternativ oder zusätzlich den über der Vorderseite (12) des Verbundkörpers (1) angeordneten als Folie ausgebildeten Master (130) anzusaugen und zu fixieren, wobei die Sauglöcher und die weiteren Sauglöcher (121') mit einer Unterdruckerzeugungseinrichtung so verbunden sind, dass gesteuert ein Unterdruck gegenüber einem Umgebungsdruck der Halterung (101) und ein Druckausgleich herstellbar sind.

12. Vorrichtung (100) nach Anspruch 10 oder 11, **dadurch gekennzeichnet, dass** die Anlageplatte (104) parallel zur Oberflächennormale (107) der Auflagefläche (102) bewegbar ist, so dass die Vorderseite (12) des mit der der Vorderseite (12) gegenüberliegenden Rückseite (14) anliegend auf der Anlagefläche (105) der Anlageplatte (104) angeordneten Verbundkörpers (1) bündig mit der Auflagefläche (102) abschließt.

13. Vorrichtung (100) nach einem der Ansprüche 10 bis 12, ferner umfassend eine steuerbare bewegliche Walze (140), welche ausgebildet ist, den Master (130) über ein Abrollen der Walze (140) nach dem Auflegen des Masters (130) auf die Vorderseite (12) des Verbundkörpers (1) an diese Vorderseite (12) anzudrücken.

## Claims

1. Method for the holographic marking of a composite body (1) for a security document, comprising the steps:
providing or producing the composite body (1), which comprises a hologram layer (3) which is photosensitive in at least one region (7);
arranging the composite body (1) in a cut-out opening (103) of a retainer (101), wherein the retainer (101) comprises a flat contact surface (102) with the cut-out opening (103), which is adjusted to the shape of the composite body (1), and wherein a contact plate (104) is arranged in the cut-out opening (103) with a contact surface (105) for a rear side (14) of the composite body (1);
exposing the composite body (1) to coherent light (162) that interferes in the photosensitive region (7) of the photosensitive layer, in order to record by exposure holographic information in the region (7) of the photosensitive hologram layer (3);
Fixing the hologram recorded by exposure in the photosensitive hologram layer (3), wherein a master (130) in the form of a film is brought into contact, by means of a master application device, with a front side (12) of the composite body (1) arranged in the cut-out opening (103) of the retainer (101), in which the master (130) configured as a film is unrolled by a roller (131) over the composite body (1), wherein the master (130) comprises at least one structure (132) which influences the light propagation, and the at least one structure (132) influencing the light propagation is copied as a contact copy on exposure into the photosensitive region (7) of the hologram layer (3), and wherein the composite body (1) is produced or provided in such a way that the composite body (1) is transparent in a section (13) of the photosensitive region (7) of the hologram layer (3) to at least one wavelength of the coherent light (162), and the exposure of the composite body (1) with the coherent light (162) of this wavelength takes place through the rear side (14) of the composite body (1) in the section (13) of the photosensitive region and through the contact plate (104) of the retainer (101), which is turned away from the front side (12) of the composite body (1), onto which the master (130) is applied, and at which the light (162) of at least the one wavelength is thrown back at the at least one structure (132) influencing the light propagation, and then interferes with itself in the photosensitive region (7) of the hologram layer (3), in order to expose the holographic information in the hologram layer (3), wherein the contact plate (104) exhibits in its contact surface (105) a cut-out opening (151) penetrating through the contact plate (104), or is transparent at least over part of its surface for the at least one wavelength of the coherent light (162) which is provided by the exposure device for the exposure.

2. Method according to claim 1, **characterised in that** the master (130) in the form of a film is pressed by means of a roller (140) onto the composite body (1) before the exposure.

3. Method according to claim 1 or 2, **characterised in that** the at least one structure (132) influencing the propagation of light is a volume hologram structure.

4. Method according to any one of the preceding claims, **characterised in that** the coherent light (162) is modulated by means of a spatial light modulator (164).

5. Method according to any one of the preceding claims, **characterised in that** the composite body (1) is arranged above suction holes (121) formed in the contact plate (104) of the retainer (101), in which a negative pressure is produced in relation to an ambient pressure of the retainer (101), in order to hold and/or fix the composite body (1) at the retainer (101), and, after the exposure, a pressure compensation and balance to the ambient pressure, or a positive pressure in relation to the ambient pressure is induced, and the composite body is released from the retainer (101).

6. Method according to any one of the preceding claims, **characterised in that** the composite body (1) is arranged in the cut-out opening (103) in such a way that its front side (12) closes flush with the contact surface (102).

7. Method according to any one of the preceding claims, **characterised in that** the master (130) exhibits an areal extension, which is larger than the areal extension of the front side (12) of the composite body (1) over the photosensitive region (7), such that the master (130) in the form of a film, after the application onto the front side (12) of the composite body, is in contact at least partially on the contact surface (102) of the retainer (101).

8. Method according to any one of the preceding claims, **characterised in that** a master (130) in the form of an exposed film is used, of which the adaptability to a cambered and/or uneven surface is better than the adaptability of the front side (12) of the composite body (1).

9. Method according to any one of the preceding claims, **characterised in that** the composite body (1) is provided or produced as a security document blank, which, until individualisation and, as appropriate, additionally after insertion into a booklet, is a physically completed security document.

10. Device (100) for the holographic marking of a composite body (1) for a security document, comprising:
a retainer (101) for receiving the composite body (1);
an exposure device (160), which provides coherent light (162) for the exposing of a photosensitive region (7) of a hologram layer (3) integrated in the composite body (1) to be marked,
wherein the exposure device (160) is configured such as to direct the light (162) onto the composite body (1) arranged in the retainer (101), wherein a master application device is provided for the laying of a master (130) formed as a film onto the front side (12) of the composite body (1) arranged in the retainer (101), wherein, in the master application device, the master (130) formed as a film can be unrolled by a roller (131) over the composite body (1),
and wherein the retainer (101) exhibits a flat contact surface (102) with a cut-out opening (103), which is adjusted to the shape of the composite body (1), and wherein a contact plate (104) is arranged in the cut-out opening (103), with a contact surface (105) for a rear side (14) of the composite body (1), and wherein the contact plate (104) exhibits a cut-out opening (151), penetrating through the contact plate (104) in the contact surface (105), or is at least transparent over part of its surface to at least one wavelength of the light (162), which is provided by the exposure device for the exposure of the photosensitive region (7) of the hologram layer (3) through the cut-out opening (151) penetrating through the contact plate (104) or through the contact plate (104) being transparent over at least part of its surface.

11. Device (100) according to claim 10, **characterised in that** the retainer (101) comprises suction holes (121) in the contact plate (104), in order to hold and/or fix the composite body (1) to the retainer (101), and, additionally or as an alternative, further suction holes (121') adjacent to the cut-out opening (103), in order, as an alternative or additionally, to draw by suction and fix the master (130), in the form of a film arranged over the front side (12) of the composite body (1), wherein the suction holes and the further suction holes (121') are connected to a negative pressure generating device in such a way that a negative pressure can be produced in a controlled manner in relation to an ambient pressure of the retainer (101), and a pressure compensation and balance can be established.

12. Device (100) according to claim 10 or 11, **characterised in that** the contact plate (104) can be moved parallel to the surface normals (107) of the contact surface (102), such that the front side (12) of the composite body (1) with the rear side (14), opposite the front side (12), in contact on the contact surface (105) of the contact plate (104), closes flush with the contact surface (102).

13. Device (100) according to any one of claims 10 to 12, further comprising a controllable moving roller (140), which is configured such that, after an unrolling movement of the roller (140), and after the contacting of the master (130) onto the front side (12) of the composite body (1), it presses the master (130) against this front side (12).

## Revendications

1. Procédé de marquage holographique d'un corps composite (1) pour un document de sécurité comportant les étapes suivantes :
la préparation ou la fabrication du corps composite (1) qui comporte une couche holographique photosensible (3) au moins dans une zone (7) ;
la disposition du corps composite (1) dans une encoche (103) d'un élément de retenue (101), dans lequel l'élément de retenue (101) comprend une surface d'appui plane (102) avec l'encoche (103), qui est adaptée à la forme du corps composite (1), et dans lequel, dans l'encoche (103), est disposée une plaque de pose (104) avec une surface de pose (105) pour une face arrière (14) du corps composite (1) ;
l'exposition du corps composite (1) avec une lumière cohérente (162), qui interfère dans la zone (7) photosensible de la couche photosensible pour exposer une information holographique dans la zone (7) de la couche holographique photosensible (3) ;
la fixation de l'hologramme exposé dans la couche holographique photosensible (3), dans lequel reposant contre une face avant (12) du corps composite (1) disposé dans l'encoche (103) de l'élément de retenue (101), un maître (130) conçu en tant que feuille est déposé par un dispositif d'application maître, dans lequel le maître (130) conçu en tant que feuille est déroulé avec un rouleau (131) sur le corps composite (1), dans lequel le maître (130) comporte au moins une structure (132) influençant la diffusion de lumière et l'au moins une structure (132) influençant la diffusion de lumière est copiée en tant que copie de contact lors de l'exposition dans la zone (7) photosensible de la couche holographique (3), et dans lequel le corps composite (1) est fabriqué ou préparé de sorte que le corps composite (1) est transparent, dans un secteur (13) de la zone (7) photosensible de la couche holographique (3), pour au moins une longueur d'onde de la lumière cohérente (162), et l'exposition du corps composite (1) avec la lumière cohérente (162) de cette longueur d'onde est effectuée à travers la face arrière (14) du corps composite (1) dans le secteur (13) de la zone photosensible et à travers la plaque de pose (104) de l'élément de retenue (101), qui est opposée à la face avant (12) du corps composite (1), sur laquelle est déposé le maître (130) et au niveau de laquelle la lumière (162) de l'au moins une longueur d'onde est réfléchie au niveau de l'au moins une structure (132) influençant la diffusion de lumière et interfère avec elle-même dans la zone (7) photosensible de la couche holographique (3) pour exposer l'information holographique dans la couche holographique (3), dans lequel la plaque de pose (104) comprend dans sa surface de pose (105) une encoche(151) traversant la plaque de pose (104) ou est, au moins sur une partie de sa surface, transparente à l'au moins une longueur d'onde de la lumière cohérente (162) qui est préparée pour l'exposition par le dispositif d'exposition.

2. Procédé selon la revendication 1, **caractérisé en ce que** le maître (130) conçu en tant que feuille est pressé au moyen d'un cylindre (140) contre le corps composite (1) avant l'exposition.

3. Procédé selon la revendication 1 ou 2, **caractérisé en ce que** l'au moins une structure (132) influençant la diffusion de lumière est une structure d'hologramme volumique.

4. Procédé selon l'une quelconque des revendications précédentes, **caractérisé en ce que** la lumière cohérente (162) est modulée au moyen d'un modulateur de lumière spatial (164).

5. Procédé selon l'une quelconque des revendications précédentes, **caractérisé en ce que** le corps composite (1) est disposé au-dessus de trous d'aspiration (121) conçus dans la plaque de pose (104) de l'élément de retenue (101), dans lesquels un vide partiel par rapport à une pression ambiante de l'élément de retenue (101) est réalisé pour retenir et/ou fixer le corps composite (1) contre l'élément de retenue (101), et, après l'exposition, un équilibrage de pression avec la pression ambiante ou une surpression par rapport à cette dernière est provoqué, et le corps composite est retiré de l'élément de retenue (101).

6. Procédé selon l'une quelconque des revendications précédentes, **caractérisé en ce que** le corps composite (1) est disposé dans l'encoche (103) de sorte que sa face avant (12) est affleurante à la surface d'appui (102).

7. Procédé selon l'une quelconque des revendications précédentes, **caractérisé en ce que** le maître (130) présente une étendue de surface qui est plus grande que l'étendue de surface de la face avant (12) du corps composite (1) au-dessus de la zone (7) photosensible de sorte que le maître (130) conçu en tant que feuille après le dépôt sur la face avant (12) du corps composite est situé au moins en partie contre la surface d'appui (102) de l'élément de retenue (101).

8. Procédé selon l'une quelconque des revendications précédentes, **caractérisé en ce qu'**un maître (130) conçu en tant que film exposé est employé, dont la capacité d'adaptation à une surface cintrée et/ou non plane est meilleure que la capacité d'adaptation de la face avant (12) du corps composite (1).

9. Procédé selon l'une quelconque des revendications précédentes, **caractérisé en ce que** le corps composite (1) est préparé et/ou fabriqué en tant qu'ébauche d'un document de sécurité qui, à l'exception d'une individualisation et, le cas échéant, encore en plus d'une insertion dans un livret, est un document de sécurité au corps déjà fabriqué.

10. Dispositif (100) de marquage holographique d'un corps composite (1) pour un document de sécurité comportant :
un élément de retenue (101) pour recevoir le corps composite (1) ;
un dispositif d'éclairage (160), qui prépare une lumière cohérente (162) pour l'exposition d'une zone (7) photosensible, intégrée dans le corps composite (1) à marquer, d'une couche holographique (3),
dans lequel le dispositif d'exposition (160) est conçu pour diriger la lumière (162) sur le corps composite (1) disposé dans l'élément de retenue (101), dans lequel un dispositif d'application de maître est prévu pour la pose d'un maître (130) conçu en tant que feuille sur la face avant (12) du corps composite (1) disposé dans l'élément de retenue (101), dans lequel, dans le dispositif d'application de maître, le maître (130) conçu en tant que feuille peut être déroulé avec un rouleau (131) sur le corps composite (1),
et dans lequel l'élément de retenue (101) comprend une surface d'appui plane (102) avec une encoche (103) qui est adaptée à la forme du corps composite (1), et dans lequel une plaque de pose (104) avec une surface de pose (105) pour une face arrière (14) du corps composite (1) est disposée dans l'encoche (103), et dans lequel la plaque de pose (104) comprend une encoche (151) traversant la plaque de pose (104) dans la surface de pose (105) ou est, au moins sur une partie de sa surface, transparente à au moins une longueur d'onde de la lumière (162) qui est préparée par le dispositif d'exposition pour l'exposition de la zone (7) photosensible de la couche holographique (3) à travers l'encoche (151) traversant la plaque de pose (104) ou à travers la plaque de pose (104) transparente au moins sur une partie de sa surface.

11. Dispositif (100) selon la revendication 10, **caractérisé en ce que** l'élément de retenue (101) comporte des trous d'aspiration (121) dans la plaque de pose (104) pour retenir et/ou fixer le corps composite (1) contre l'élément de retenue (101), et comporte en plus ou en variante d'autres trous d'aspiration (121') au voisinage de l'encoche (103) pour, en variante ou en plus, aspirer et fixer le maître (130) conçu en tant que feuille au-dessus de la face avant (12) du corps composite (1), dans lequel les trous d'aspiration et les autres trous d'aspiration (121') sont reliés à un dispositif de génération de vide partiel de sorte qu'un vide partiel par rapport à une pression ambiante de l'élément de retenue (101) et un équilibrage de pression peuvent être produits de manière commandée.

12. Dispositif (100) selon la revendication 10 ou 11, **caractérisé en ce que** la plaque de pose (104) est mobile parallèlement à la droite perpendiculaire (107) à la surface d'appui (102) de sorte que la face avant (12) du corps composite (1) reposant avec la face arrière (14) opposée à la face avant (12) sur la surface de pose (105) de la plaque de pose (104) est affleurante à la surface d'appui (102).

13. Dispositif (100) selon l'une quelconque des revendications 10 à 12, comportant en outre un cylindre (140) mobile commandable, qui est conçu pour presser le maître (130) par un déroulement du cylindre (140) après la pose du maître (130) sur la face avant (12) du corps composite (1) contre cette face avant (12).
